(19) Europäisches Patentamt / European Patent Office / Office européen des brevets

(11) **EP 2 833 101 A1**

(12) **EUROPÄISCHE PATENTANMELDUNG**

(43) Veröffentlichungstag:
04.02.2015 Patentblatt 2015/06

(51) Int Cl.:
**G01D 5/247** (2006.01)  **G01B 11/14** (2006.01)

(21) Anmeldenummer: **14179287.9**

(22) Anmeldetag: **31.07.2014**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **31.07.2013 DE 102013012761**

(71) Anmelder: **Georg-Simon-Ohm Hochschule für angewandte Wissenschaften Fachhochschule Nürnberg 90489 Nürnberg (DE)**

(72) Erfinder:
• **Dr. Poisel, Hans**
  **90489 Nürnberg (DE)**
• **Dr. Ziemann, Olaf**
  **90408 Nürnberg (DE)**
• **Bachmann, Alexander**
  **90478 Nürnberg (DE)**
• **Luber, Michael**
  **90439 Nürnberg (DE)**

(74) Vertreter: **Henkel, Breuer & Partner Patentanwälte Maximiliansplatz 21 80333 München (DE)**

(54) **Vorrichtung zur Bestimmung der Position einer Signalquelle**

(57) Die Erfindung betrifft eine Vorrichtung zur Bestimmung der Position einer Signalquelle, die ausgestaltet ist, um mit einer Modulationsfrequenz modulierte Signale auszugeben, aufweisend: einen Leiter, der derart angeordnet ist, dass er die modulierten Signale an verschiedenen Positionen entlang des Leiters empfängt, und der ausgestaltet ist, um bei Empfang eines modulierten Signals das modulierte Signal zu einem ersten Leiterende und zu einem zweiten Leiterende in jeweils entgegengesetzte Richtungen zu leiten; einen Detektor, ausgestaltet ist, um das modulierte Signal an dem ersten Leiterende und an dem zweiten Leiterende zu erfassen; und eine Bestimmungseinrichtung, die ausgestaltet ist, um: Phasendifferenz zwischen dem an dem ersten Leiterende erfassten modulierten Signal und dem an dem zweiten Leiterende erfassten modulierten Signal zu bestimmen, und die Position der Signalquelle in Bezug auf den Leiter basierend auf der Phasendifferenz zu bestimmen.

Fig. 3

**Beschreibung**

Die Erfindung betrifft eine Vorrichtung zur Bestimmung der Position einer Signalquelle und ein Gerät, in dem eine solche Vorrichtung eingesetzt wird.

Bei verschiedenen Anwendungen stellt sich dem Fachmann das Problem der Bestimmung der Position einer Komponente, die sich auf einer Kreisbahn bewegt. Es treten beispielsweise Fälle auf, in welchen die Position eines rotierenden Sensors bei einem Computertomographen zu bestimmen ist.

Aus dem Stand der Technik ist eine Vielzahl von Lösungen hierzu bekannt. Eine dieser Lösungen besteht darin, dass die sich auf einer Kreisbahn bewegende und daher rotierende Komponente (d.h. der rotierende Sensor) mit einem codierten Muster (sogenannte Codierscheiben) versehen ist, welches optisch abgetastet wird. Eine weitere dieser Lösungen besteht darin, dass Hall-Elemente auf der rotierenden Komponente angeordnet sind, so dass mit Hall-Sensoren magnetische Messungen zur Positionsbestimmung durchgeführt werden können.

Ein Problem dieser Technik besteht allerdings darin, dass Codierscheiben bzw. Hall-Elemente auf einer rotationssymmetrischen Anordnung aufzubringen sind. Das Verwenden von Codierscheiben ist meist kostenintensiv. Zudem müssen Codierscheiben bei der Montage aufwendig justiert werden. Sowohl das Aufbringen der Codierscheiben als auch das Aufbringen der Hall-Elemente kann mitunter erschwert werden, wenn aus Platzgründen individuelle Lösungen für die Codierscheiben und die Hall-Elemente gefunden werden müssen.

Eine weitere Lösung ist beispielsweise in der DE 4421616 A beschrieben. Bei diesem Stand der Technik wird eine fluoreszierende Lichtleiterfaser zu einer ringförmigen Schlaufe gebogen. Die fluoreszierende Lichtleiterfaser selbst ist eine übliche Lichtleiterfaser, die in geeigneter Weise mit einem fluoreszierenden Farbstoff dotiert ist, z.B. mit Rhodamine G, Nil Blue oder anderen.

Bestrahlt man diese fluoreszierende Lichtleiterfaser mit einem Licht einer geeigneten Wellenlänge, z. B. 650 nm, so wird der in der Lichtleiterfaser enthaltene Farbstoff die Strahlung absorbieren und Licht mit einer größeren Wellenlänge (Stokes-Verschiebung) wieder emittieren. Die Emission erfolgt innerhalb der Lichtleiterfaser und in alle Richtungen, so dass ein Teil des so emittierten Fluoreszenzlichts entlang der Lichtleiterfaser zu deren Enden geleitet wird, und dort detektiert werden kann.

Gemäß dem genannten Stand der Technik wird eine derartige fluoreszierende Lichtleiterfaser von der Seite über ihre Umfangsfläche mit einem optischen Signal beaufschlagt, das von einer Signalquelle, beispielsweise einer LED oder einer Laser-Diode stammt, und das gemäß dem RZ- oder dem NRZ-Pulsmodulationsschema moduliert ist. Anders ausgedrückt, ein digitales Signal wird durch diskrete Pulse übertragen, wobei ein Licht-AN-Zustand für eine 1 und ein Licht-AUS-Zustand für eine 0 stehen kann, oder umgekehrt.

Analog zu einem elektrischen Potentiometer kann die Position, an welcher das Licht in die fluoreszierende Lichtleiterfaser eingekoppelt worden ist, bestimmt werden, indem zunächst an den beiden Enden der Lichtleiterfaser die Lichtleistungen mit Hilfe von Fasersensoren gemessen werden und anschließend das Verhältnis der Lichtleistungen an den beiden Enden der Lichtleiterfaser berechnet wird. Anders ausgedrückt, es wird zunächst jeweils eine Amplitude von an den beiden Enden der Lichtleiterfaser erfassten Lichtsignalen mit Hilfe von Fasersensoren gemessen. Anschließend wird das Verhältnis der gemessenen Amplituden berechnet.

Ein Problem dieser Technik besteht allerdings darin, dass Messungen der Amplitude bei derartigen Fasersensoren stark von äußeren Parametern abhängig sind und somit sehr schnell zu Fehlmessungen führen können.

Die Aufgabe der Erfindung besteht deshalb darin, eine Vorrichtung zur Bestimmung der Position einer Signalquelle bereitzustellen, die diese Nachteile überwindet.

Die Aufgabe der Erfindung wird durch eine Vorrichtung gemäß den unabhängigen Ansprüchen 1 und 3 und ein Gerät gemäß dem unabhängigen Anspruch 11 gelöst. Die abhängigen Ansprüche betreffen weitere vorteilhafte Ausgestaltungen der Erfindung.

Gemäß einem Aspekt der Erfindung wird eine Vorrichtung zur Bestimmung der Position einer Signalquelle, die ausgestaltet ist, um mit einer Modulationsfrequenz modulierte Signale auszugeben, bereitgestellt, aufweisend:

einen Leiter, der derart angeordnet ist, dass er die modulierten Signale an verschiedenen Positionen entlang des Leiters empfängt, und der ausgestaltet ist, um bei Empfang eines modulierten Signals das modulierte Signal zu einem ersten Leiterende und zu einem zweiten Leiterende in jeweils entgegengesetzte Richtungen zu leiten,
einen Detektor, der ausgestaltet ist, um das modulierte Signal an dem ersten Leiterende und an dem zweiten Leiterende zu erfassen, und
eine Bestimmungseinrichtung, die ausgestaltet ist, um:

eine Phasendifferenz zwischen dem an dem ersten Leiterende erfassten modulierten Signal und dem an dem zweiten Leiterende erfassten modulierten Signal zu bestimmen, und
die Position der Signalquelle in Bezug auf den Leiter basierend auf der Phasendifferenz zu bestimmen.

Gemäß einem weiteren Aspekt der Erfindung wird eine Vorrichtung bereitgestellt, wobei die Bestimmungseinrichtung ferner ausgestaltet ist, um:

eine Laufzeit des an dem ersten Leiterende erfassten modulierten Signals als eine erste Laufzeit und eine Laufzeit des an dem zweiten Leiterende erfassten modulierten Signals als eine zweite Laufzeit basierend auf der Phasendifferenz zu bestimmen, ein Verhältnis der ersten Laufzeit zu der zweiten Laufzeit zu bestimmen, und die Position der Signalquelle basierend auf dem Verhältnis der ersten Laufzeit zu der zweiten Laufzeit zu bestimmen.

Gemäß einem weiteren Aspekt der Erfindung wird eine Vorrichtung zur Bestimmung der Position einer Signalquelle, die ausgestaltet ist, um ein mit einer Modulationsfrequenz moduliertes Signal auszugeben, das an verschiedenen Positionen in einen Leiter eingekoppelt werden kann und entlang des Leiters in entgegengesetzte Richtungen geleitet wird, bereitgestellt, wobei die Vorrichtung ausgestaltet ist, um:

eine Phasendifferenz zwischen einem an einem ersten Ende eines Leiters erfassten modulierten Signal und einem an einem zweiten Ende des Leiters erfassten modulierten Signal zu bestimmen, und die Position der Signalquelle in Bezug auf den Leiter basierend auf der Phasendifferenz zu bestimmen.

Gemäß einem weiteren Aspekt der Erfindung wird eine Vorrichtung bereitgestellt, wobei die Vorrichtung ferner ausgestaltet ist, um:

eine Laufzeit des an dem ersten Leiterende erfassten modulierten Signals als eine erste Laufzeit und eine Laufzeit des an dem zweiten Leiterende erfassten modulierten Signals als eine zweite Laufzeit basierend auf der Phasendifferenz zu bestimmen, ein Verhältnis der ersten Laufzeit zu der zweiten Laufzeit zu bestimmen, und die Position der Signalquelle basierend auf dem Verhältnis der ersten Laufzeit zu der zweiten Laufzeit zu bestimmen.

Gemäß einem weiteren Aspekt der Erfindung wird eine Vorrichtung bereitgestellt, wobei die Signalquelle und der Leiter ausgestaltet sind, um relativ zueinander beweglich zu sein.

Gemäß einem weiteren Aspekt der Erfindung wird eine Vorrichtung bereitgestellt, wobei der Leiter in Ringform ausgebildet ist.

Gemäß einem weiteren Aspekt der Erfindung wird eine Vorrichtung bereitgestellt, wobei der Leiter aus zumindest einem Leiterabschnitt ausgebildet ist.

Gemäß einem weiteren Aspekt der Erfindung wird eine Vorrichtung bereitgestellt, wobei die von der Signalquelle ausgegebenen Signale optische Signale sind und der Leiter eine fluoreszierende Lichtleiterfaser ist.

Gemäß einem weiteren Aspekt der Erfindung wird eine Vorrichtung bereitgestellt, wobei die von der Signalquelle ausgegebenen Signale elektrische Signale sind und der Leiter ein elektrisch leitfähiger Leiter ist.

Gemäß einem weiteren Aspekt der Erfindung wird eine Vorrichtung bereitgestellt, wobei die von der Signalquelle ausgegebenen Signale akustische Signale sind und der Leiter ein akustischer Leiter ist.

Gemäß einem weiteren Aspekt der Erfindung wird ein Gerät zur Übertragung von Daten zwischen zwei um eine gemeinsame Achse, sich relativ zueinander rotierenden Teilen, mit einer erfindungsgemäßen Vorrichtung bereitgestellt, wobei auf dem einen Teil die Signalquelle und auf dem anderen Teil der Leiter um die Drehachse angeordnet ist.

Gemäß einem weiteren Aspekt der Erfindung wird ein Gerät bereitgestellt, wobei das Gerät ein Computertomograph ist.

Gemäß einem weiteren Aspekt der Erfindung wird ein Gerät bereitgestellt, wobei das Gerät ein Radargerät ist.

Im Folgenden wird die Erfindung detailliert anhand der beiliegenden Figuren und bevorzugter Ausführungsformen beschrieben.

In den Figuren zeigen:

Fig. 1   ein Blockschaltbild der erfindungsgemäßen Vorrichtung gemäß einer bevorzugten Ausführungsform;

Fig. 2   das Funktionsprinzip der Datenübertragung zwischen einer Lichtquelle und einer fluoreszierenden Lichtleiterfaser;

Fig. 3   einen groben schematischen Aufbau eines faseroptischen Drehübertragers mit einer Vorrichtung zur optischen Übertragung von digitalen Signalen; und

Fig. 4   einen Querschnitt durch einen Computertomographen mit der erfindungsgemäßen Vorrichtung.

Gemäß einer bevorzugten Ausführungsform der Erfindung weist die erfindungsgemäße Vorrichtung zur Bestimmung der Position einer Signalquelle 1, die mit einer Modulationsfrequenz modulierte Signale ausgibt, die an verschiedenen Positionen in einen Leiter 3 eingekoppelt und entlang des Leiters 3 in entgegengesetzte Richtungen geleitet werden, eine Bestimmungseinrichtung 9 auf.

Gemäß einer weiteren bevorzugten Ausführungsform der Erfindung weist die erfindungsgemäße Vorrichtung zur Bestimmung der Position einer Signalquelle 1, die mit einer Modulationsfrequenz modulierte Signale ausgibt, einen Leiter 3, einen Detektor 7 und eine Bestimmungseinrichtung 9 auf.

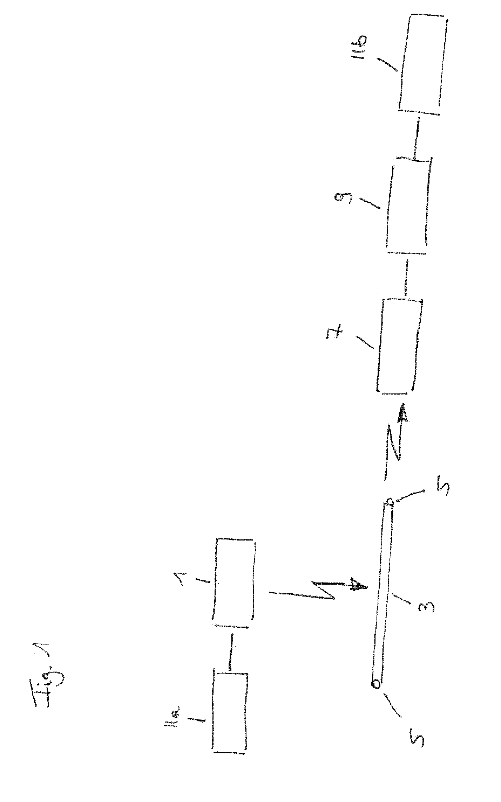

Fig. 1 zeigt ein Blockschaltbild der erfindungsgemäßen Vorrichtung gemäß einer bevorzugten Ausführungsform.

In einer nicht gezeigten Datenquelle wird ein digitales Signal einem Vorverzerrer 11a zugeführt. In diesem Vorverzerrer 11a wird das digitale Signal in ein Analogsignal umgewandelt und an die Signalquelle 1 angelegt. Die Signalquelle 1 gibt Signale aus. Die von der Signalquelle 1 ausgegebenen Signale weisen einen Pegel auf, der beruhend auf den zu übertragenen digitalen Daten mit einer Modulationsfrequenz moduliert ist. Anders ausgedrückt, die Signale sind Amplituden-moduliert. Diese Amplitudenmodulierten Signale können entweder nach der bekannten Pulsamplitudenmodulation oder nach der Orthogonal Frequency Division Multiplexing/Discrete Multitone-Modulation (OFDM/DMT) moduliert sein. Andere Amplitudenmodulationstechniken sind ebenfalls möglich.

Die modulierten Signale werden an verschiedenen Positionen entlang des Leiters 3 von dem Leiter 3 empfangen, bzw. in den Leiter 3 eingekoppelt. Von der Empfangsposition wird das modulierte Signal zu beiden Enden 5 des Leiters 3 in jeweils entgegengesetzte Richtungen geleitet.

Die Enden 5 des Leiters 3 stehen mit dem Detektor 7 in Verbindung, der das modulierte Signal erfasst, sobald es die Enden 5 erreicht hat.

Die Bestimmungseinrichtung 9 ist dem Detektor 7 nachgeschaltet. Die Bestimmungseinrichtung 9 bestimmt eine Phasendifferenz zwischen dem an einem Ende 5 des Leiters 3 erfassten modulierten Signal und dem an dem anderen Ende 5 des Leiters 3 erfassten modulierten Signal. Die Bestimmungseinrichtung 9 bestimmt eine Laufzeit des an einem Ende 5 des Leiters 3 erfassten modulierten Signals ("erste Laufzeit") und eine Laufzeit des an dem anderen Ende 5 des Leiters 3 erfassten modulierten Signals ("zweite Laufzeit") basierend auf der Phasendifferenz. Die Bestimmungseinrichtung 9 bestimmt ein Verhältnis der ersten Laufzeit zu der zweiten Laufzeit. Die Bestimmungseinrichtung 9 bestimmt die Position der Signalquelle 1 in Bezug auf den Leiter 3 basierend auf dem Verhältnis der ersten Laufzeit zu der zweiten Laufzeit. Dies bedeutet wiederum, dass die Bestimmungseinrichtung 9 die Position der Signalquelle 1 in Bezug auf den Leiter 3 basierend auf der Phasendifferenz bestimmt.

Die Signalquelle 1 und der Leiter 3 sind relativ zueinander beweglich. Die Signalquelle 1 und der Leiter 3 können sich koaxial zueinander bewegen. Der Leiter 3 kann in Ringform ausgebildet sein. Alternativ kann der Leiter 3 spiralförmig ausgebildet oder linear ausgedehnt sein. Ferner ist der Leiter 3 aus zumindest einem Leiterabschnitt ausgebildet. Der Leiter 3 kann auch aus mehreren Leiterabschnitten ausgebildet sein und somit aus mehreren Teilabschnitten bestehen.

Zweckmäßigerweise ist dem Detektor 7 und der Bestimmungseinrichtung 9 ein Entzerrer 11b zugeordnet, der das empfangene Signal entzerrt und in ein digitales Signal zurückwandelt.

Gemäß einer weiteren bevorzugten Ausführungsform der Erfindung sind die von der Signalquelle 1 ausgegebenen Signale optische Signale, und der Leiter 3 ist eine fluoreszierende Lichtleiterfaser. Auf diese Art und Weise findet die Signalübertragung zwischen der Signalquelle 1 und dem Leiter 3 kontaktlos statt.

Das Funktionsprinzip der fluoreszierenden Lichtleiterfaser ist im Zusammenhang mit Fig. 1 beschrieben. Licht, das von der Signalquelle 1 emittiert wird, trifft auf die Umfangsfläche einer fluoreszierenden Lichtleiterfaser 3. Ein in der fluoreszierenden Lichtleiterfaser 3 enthaltener Farbstoff absorbiert einen Teil dieses Lichts und emittiert seinerseits Fluoreszenzlicht mit einer größeren Wellenlänge. Bei geeigneter Wahl des Farbstoffs und der Anregungswellenlänge ist es möglich, die meist vorhandene teilweise Überlappung des Absorptionsspektrums und des Emissionsspektrums gering zu halten, so dass nur eine geringe Selbstabsorption auftritt.

Der Emissionsprozess erfolgt mit einer für den Farbstoff typischen Zeitverzögerung (der sognannten Fluoreszenzlebensdauer), die üblicherweise im Bereich von einigen Nanosekunden liegt, was die Übertragungsbandbreite begrenzt.

Abhängig vom Aufbau der fluoreszierenden Lichtleiterfaser 3, speziell der numerischen Apertur, des Durchmessers und ähnlichem, wird ein Teil des innerhalb der fluoreszierenden Lichtleiterfaser 3 erzeugten Lichtes in dieser gefangen und per Totalreflexion an der Umfangsfläche zu den beiden Enden 5 der fluoreszierenden Lichtleiterfaser 3 geführt. Dort kann das Licht in geeigneter Weise detektiert werden. Die Detektion des Lichts erfolgt durch einen Detektor 7, wie etwa eine Fotozelle oder ähnlichem. Der Anteil der geführten Strahlung wird durch die sogenannte Piping-Efficiency PE beschrieben.

$$PE = 1 - n_m/n_k$$

wobei $n_m$ und $n_k$ die Brechzahlen von jeweils dem Fasermantel bzw. dem Faserkern der fluoreszierenden Lichtleiterfaser 3 sind.

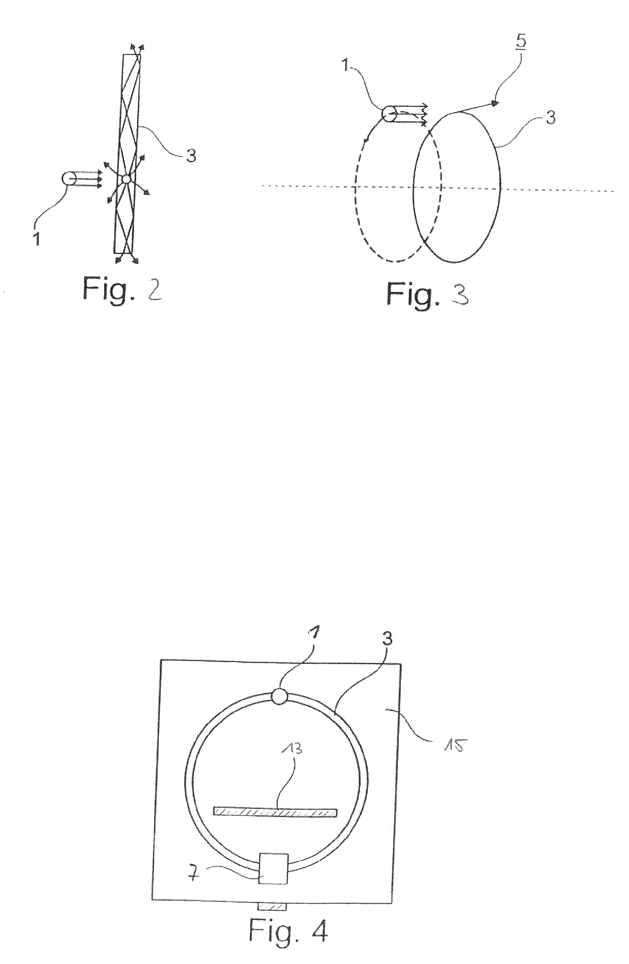

Wie in Fig. 3 beschrieben ist, ist es besonders vorteilhaft, die fluoreszierende Lichtleiterfaser 3 in Form einer Schlaufe (d.h. in Ringform) konzentrisch zu einer Drehachse eines zweiten Bauteils zu biegen. An diesem zweiten Bauteil wird als eine optische Signalquelle 1 eine Laserdiode oder eine LED vorgesehen, die von der Drehachse beabstandet ist, und die so ausgerichtet ist, dass das von ihr emittierte Licht auf die fluoreszierende Lichtleiterfaser 3 des anderen Bauteils fällt. Wenn sich nun eines der beiden Bauteile um die gemeinsame Rotationsachse dreht, ist dennoch eine sichere Signalübertragung zwischen den beiden Teilen möglich.

Gemäß dieser bevorzugten Ausführungsform kann an einem der beiden Enden 5 der fluoreszierenden Lichtleiterfaser 3 ein Spiegel angeordnet sein, an welchem das durch die Faser geleitete Licht reflektiert wird, so dass es zu dem anderen der beiden Enden 5 durch die Faser geleitet wird.

Gemäß einer weiteren bevorzugten Ausführungsform der Erfindung sind die von der Signalquelle 1

ausgegebenen Signale elektrische Signale und der Leiter 3 ist ein elektrisch leitfähiger Leiter. Beispielsweise kann der Leiter 3 aus einem elektrisch leitfähigen Metall bestehen. Die Übertragung der Signale von der Signalquelle 1 zu dem Leiter 3 findet statt, indem die Signalquelle 1 den Leiter 3 beispielsweise durch einen Schleifkontakt kontaktiert.

Gemäß einer weiteren bevorzugten Ausführungsform der Erfindung sind die von der Signalquelle 1 ausgegebenen Signale akustische Signale und der Leiter 3 ist ein akustischer Leiter. Beispielsweise kann der Leiter 3 ein mit einer Flüssigkeit gefülltes Rohr sein, in welchem sich eine durch die Signalquelle 1 angeregte akustische Welle ausbreitet.

Fig. 4 zeigt die Anwendung der Erfindung im Zusammenhang mit einem Computertomographen 15 als ein System bzw. ein Gerät, bei dem die erfindungsgemäße Vorrichtung besonders vorteilhaft eingesetzt werden kann. Bei einem Computertomographen müssen regelmäßig große Datenmengen in kurzer Zeit zwischen einem rotierenden Teil und einem feststehenden Teil übertragen werden. Eine Übertragung über die Rotationsachse ist nicht möglich, da hier der zu untersuchende Patient bzw. die Liege 13 für den Patienten positioniert ist. Erfindungsgemäß wird daher, wie dies in Fig. 4 gezeigt ist, auf dem feststehenden Teil des Computertomographen ein schlaufenförmiger (d.h. ringförmiger) Leiter 3 angeordnet, dessen Enden mit einer geeigneten Detektorschaltung 7 verbunden ist.

Diese Schlaufe ist konzentrisch zur Rotationsachse ausgebildet und derart von dieser Rotationsachse beabstandet, dass hinreichend Platz für den Patienten zur Verfügung steht. An dem rotierenden Teil ist beabstandet der Rotationsachse eine Signalquelle 1 vorgesehen.

Die von dem rotierenden Teil des Computertomographen aufgenommene Bildinformation wird in digitale Daten umgewandelt, mit dem Pulsamplitudenmodulationsverfahren oder dem Multiple-Frequenz-Multiplex-Verfahren in ein Amplitudenmoduliertes Signal an der Signalquelle 1 umgewandelt, und zu dem Leiter 3 übertragen.

Durch den Leiter 3 wird das Signal zu dessen Enden 5 geleitet. Ein geeigneter Detektor 7 erfasst das Signal an den Enden 5 des Leiters, das dann einer Entzerrung und Demodulation sowie einer Analog-Digital-Wandlung unterzogen wird. Auf diese Art und Weise werden die digitalen Bilddaten auf der Empfängerseite wiederhergestellt. Aufgrund der hohen Datenübertragungsbandbreite, die das erfindungsgemäße Gerät zur Verfügung stellt, können die Bilddaten mit geeigneten Fehlerkorrekturdaten übertragen werden, so dass eine sichere, zuverlässige und schnelle Datenübertragung zwischen dem rotierenden und dem feststehenden Teil möglich ist.

Obwohl die Erfindung anhand bevorzugter Ausführungsformen beschrieben wurde, ist sie hierauf nicht beschränkt. Anstelle eines Computertomographen kann die Erfindung auch vorteilhaft in einer Radarantenne verwendet werden.

**Patentansprüche**

1. Vorrichtung zur Bestimmung der Position einer Signalquelle (1), die ausgestaltet ist, um mit einer Modulationsfrequenz modulierte Signale auszugeben, aufweisend:

einen Leiter (3), der derart angeordnet ist, dass er die modulierten Signale an verschiedenen Positionen entlang des Leiters empfängt, und der ausgestaltet ist, um bei Empfang eines modulierten Signals das modulierte Signal zu einem ersten Leiterende (5) und zu einem zweiten Leiterende (5) in jeweils entgegengesetzte Richtungen zu leiten,
einen Detektor (7), der ausgestaltet ist, um das modulierte Signal an dem ersten Leiterende und an dem zweiten Leiterende zu erfassen, und
eine Bestimmungseinrichtung (9), die ausgestaltet ist, um:

eine Phasendifferenz zwischen dem an dem ersten Leiterende erfassten modulierten Signal und dem an dem zweiten Leiterende erfassten modulierten Signal zu bestimmen, und
die Position der Signalquelle in Bezug auf den Leiter basierend auf der Phasendifferenz zu bestimmen.

2. Vorrichtung nach Anspruch 1, wobei die Bestimmungseinrichtung (9) ferner ausgestaltet ist, um:

eine Laufzeit des an dem ersten Leiterende (5) erfassten modulierten Signals als eine erste Laufzeit und eine Laufzeit des an dem zweiten Leiterende (5) erfassten modulierten Signals als eine zweite Laufzeit basierend auf der Phasendifferenz zu bestimmen,
ein Verhältnis der ersten Laufzeit zu der zweiten Laufzeit zu bestimmen, und
die Position der Signalquelle (1) basierend auf dem Verhältnis der ersten Laufzeit zu der zweiten Laufzeit zu bestimmen.

3. Vorrichtung zur Bestimmung der Position einer Signalquelle (1), die ausgestaltet ist, um ein mit einer Modulationsfrequenz moduliertes Signal auszugeben, das an verschiedenen Positionen in einen Leiter (3) eingekoppelt werden kann und entlang des Leiters (3) in entgegengesetzte Richtungen geleitet wird, wobei die Vorrichtung ausgestaltet ist, um:

eine Phasendifferenz zwischen einem an einem ersten Ende (5) eines Leiters (3) erfassten modulierten Signal und einem an einem zweiten Ende (5) des Leiters erfassten modulierten Signal zu bestimmen, und

die Position der Signalquelle in Bezug auf den Leiter basierend auf der Phasendifferenz zu bestimmen.

4. Vorrichtung nach Anspruch 3, wobei die Vorrichtung ferner ausgestaltet ist, um:

eine Laufzeit des an dem ersten Leiterende (5) erfassten modulierten Signals als eine erste Laufzeit und eine Laufzeit des an dem zweiten Leiterende (5) erfassten modulierten Signals als eine zweite Laufzeit basierend auf der Phasendifferenz zu bestimmen,

ein Verhältnis der ersten Laufzeit zu der zweiten Laufzeit zu bestimmen, und

die Position der Signalquelle (1) basierend auf dem Verhältnis der ersten Laufzeit zu der zweiten Laufzeit zu bestimmen.

5. Vorrichtung nach einem der Ansprüche 1 bis 4, wobei die Signalquelle (1) und der Leiter (3) ausgestaltet sind, um relativ zueinander beweglich zu sein.

6. Vorrichtung nach einem der Ansprüche 1 bis 5, wobei der Leiter (3) in Ringform ausgebildet ist.

7. Vorrichtung nach einem der Ansprüche 1 bis 6, wobei der Leiter (3) aus zumindest einem Leiterabschnitt ausgebildet ist.

8. Vorrichtung nach einem der Ansprüche 1 bis 7, wobei die von der Signalquelle (1) ausgegebenen Signale optische Signale sind und der Leiter (3) eine fluoreszierende Lichtleiterfaser ist.

9. Vorrichtung nach einem der Ansprüche 1 bis 7, wobei die von der Signalquelle (1) ausgegebenen Signale elektrische Signale sind und der Leiter (3) ein elektrisch leitfähiger Leiter ist.

10. Vorrichtung nach einem der Ansprüche 1 bis 7, wobei die von der Signalquelle (1) ausgegebenen Signale akustische Signale sind und der Leiter (3) ein akustischer Leiter ist.

11. Gerät (15) zur Übertragung von Daten zwischen zwei um eine gemeinsame Achse, sich relativ zueinander rotierenden Teilen, mit einer Vorrichtung nach einem der Ansprüche 8 bis 10, wobei auf dem einen Teil die Signalquelle (1) und auf dem anderen Teil der Leiter (3) um die Drehachse angeordnet ist.

12. Gerät (15) nach Anspruch 11, wobei das Gerät ein Computertomograph ist.

13. Gerät (15) nach Anspruch 11, wobei das Gerät ein Radargerät ist.

Fig. 1

Fig. 2

Fig. 3

Fig. 4

Europäisches
Patentamt

European
Patent Office

Office européen
des brevets

**EUROPÄISCHER RECHERCHENBERICHT**

Nummer der Anmeldung

EP 14 17 9287

| EINSCHLÄGIGE DOKUMENTE | | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (IPC) |
| Y | DE 35 11 757 A1 (FRAUNHOFER GES FORSCHUNG [DE]) 2. Oktober 1986 (1986-10-02) * Seite 7, Zeile 25 - Seite 10, Zeile 2 * * Abbildung 1 * ----- | 1,2 | INV. G01D5/247 G01B11/14 |
| X | DE 196 26 448 A1 (INGBUERO FUER SPEZIALTECHNIK I [DE]; GOS GES ZUR FOERDERUNG ANGEWAN [D] 2. Januar 1998 (1998-01-02) | 3-5,7,9, 10 | |
| Y | * Spalte 3, Zeile 12 - Spalte 4, Zeile 9 * * Abbildung 3 * ----- | 1,2,6,8, 11-13 | |
| Y | WO 2013/010522 A1 (GEORG SIMON OHM HOCHSCHULE FUER ANGEWANDTE WISSENSCHAFTEN FACHHOCHSCHU) 24. Januar 2013 (2013-01-24) | 6,8, 11-13 | |
| A | * Seite 9, Absatz 4 - Seite 11, Absatz 1 * * Seite 7 * * Seite 11, Absatz 2 * * Abbildungen 3,4 * ----- | 1,3 | |
| | | | RECHERCHIERTE SACHGEBIETE (IPC) G01D H04B G01B |

Der vorliegende Recherchenbericht wurde für alle Patentansprüche erstellt

| Recherchenort | Abschlußdatum der Recherche | Prüfer |
|---|---|---|
| München | 21. November 2014 | Paraf, Edouard |

**ANHANG ZUM EUROPÄISCHEN RECHERCHENBERICHT
ÜBER DIE EUROPÄISCHE PATENTANMELDUNG NR.**

EP 14 17 9287

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

21-11-2014

| Im Recherchenbericht angeführtes Patentdokument | | Datum der Veröffentlichung | Mitglied(er) der Patentfamilie | | Datum der Veröffentlichung |
|---|---|---|---|---|---|
| DE 3511757 | A1 | 02-10-1986 | KEINE | | |
| DE 19626448 | A1 | 02-01-1998 | KEINE | | |
| WO 2013010522 | A1 | 24-01-2013 | CN | 104040916 A | 10-09-2014 |
| | | | EP | 2732567 A1 | 21-05-2014 |
| | | | JP | 2014522158 A | 28-08-2014 |
| | | | WO | 2013010522 A1 | 24-01-2013 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4421616 A